# EUROPEAN PATENT APPLICATION

(11) **EP 4 415 075 A1**
(43) Date of publication of application: **14.08.2024**
(21) Application number: 23217967.1
(22) Date of filing: 19.12.2023
(51) Int. Cl.: H01M 4/525, H01M 10/0525, H01M 10/0569

(54) **NONAQUEOUS ELECTROLYTE SECONDARY BATTERY**

(30) Priority: 07.02.2023 JP 2023016580
(71) Applicant: Prime Planet Energy & Solutions, Inc., Chuo-ku Tokyo 103-0022 (JP)
(72) Inventor: MATSUTA, Takahisa, Tokyo, 103-0022 (JP); KONDO, Shimpei, Tokyo, 103-0022 (JP)
(74) Representative: Kuhnen & Wacker Patent- und Rechtsanwaltsbüro PartG mbB

(57) **Abstract**

Provided is a nonaqueous electrolyte secondary battery having excellent output characteristics while using a positive electrode active material with a small BET specific surface area. A nonaqueous electrolyte secondary battery disclosed here includes a positive electrode, a negative electrode, and a nonaqueous electrolyte. The positive electrode includes a positive electrode active material layer containing a positive electrode active material. The positive electrode active material includes a lithium nickel cobalt manganese composite oxide. The positive electrode active material has a BET specific surface area of 1.8 m²/g to 2.8 m²/g. A ratio of the BET specific surface area to an average particle size (D50) of the positive electrode active material is 0.62 or more. The nonaqueous electrolyte contains a nonaqueous solvent and an electrolyte salt. The nonaqueous solvent contains methyl acetate.

## Description

### TECHNICAL FIELD

The present disclosure relates to a nonaqueous electrolyte secondary battery.

### BACKGROUND ART

Recent nonaqueous electrolyte secondary batteries such as lithium ion secondary batteries are suitably used for, for example, portable power supplies for devices such as personal computers and portable terminals, and vehicle driving power supplies for vehicles such as battery electric vehicles (BEVs), hybrid electric vehicles (HEVs), and plug-in hybrid electric vehicles (PHEVs).

A positive electrode active material is typically used for a positive electrode of a nonaqueous electrolyte secondary battery, and a lithium nickel manganese composite oxide is known as a positive electrode active material (see, for example, Patent Document 1). It is also known that characteristics of the nonaqueous electrolyte secondary battery varies depending on a BET specific surface area of the positive electrode active material, and the range of the BET specific surface area of the positive electrode active material used in the battery widely ranges from about 0.1 m²/g to a value exceeding 10 m²/g.

### CITATION LIST

### PATENT DOCUMENT

Patent Document 1: JP2019-175721A

### SUMMARY OF THE INVENTION

A positive electrode active material having a small BET specific surface area has advantages of high stability and capability of providing a nonaqueous electrolyte secondary battery with high durability. However, when the positive electrode active material has a small BET specific surface area, a reaction area is small, and thus, a trade-off that output characteristics deteriorate arises. It is therefore significantly difficult to achieve both a small BET specific surface area and excellent output characteristics, and development of a nonaqueous electrolyte secondary battery having excellent output characteristics while using a positive electrode active material with a small BET specific surface area has been demanded.

Embodiments of the present disclosure provide nonaqueous electrolyte secondary batteries each having excellent output characteristics while using a positive electrode active material with a BET specific surface area.

A nonaqueous electrolyte secondary battery disclosed here includes a positive electrode, a negative electrode, and a nonaqueous electrolyte. The positive electrode includes a positive electrode active material layer containing a positive electrode active material. The positive electrode active material includes a lithium nickel cobalt manganese composite oxide. The positive electrode active material has a BET specific surface area of 1.8 m²/g to 2.8 m²/g. A ratio of the BET specific surface area to an average particle size (D50) of the positive electrode active material is 0.62 or more. The nonaqueous electrolyte contains a nonaqueous solvent and an electrolyte salt. The nonaqueous solvent contains methyl acetate.

This configuration can provide nonaqueous electrolyte secondary batteries each having excellent output characteristics while using a positive electrode active material with a small BET specific surface area.

### BRIEF DESCRIPTION OF THE DRAWINGS

FIG. 1 is a cross-sectional view schematically illustrating an internal structure of a lithium ion secondary battery according to one embodiment of the present disclosure.
FIG. 2 is a schematic disassembled view illustrating a structure of a wound electrode body of a lithium ion secondary battery according to one embodiment of the present disclosure.
FIG. 3 is a schematic cross-sectional view of an example of hollow particles of a positive electrode active material used in a lithium ion secondary battery according to one embodiment of the present disclosure.
FIG. 4 is a schematic cross-sectional view of another example of hollow particles of a positive electrode active material used in a lithium ion secondary battery according to one embodiment of the present disclosure.

### DETAILED DESCRIPTION OF THE PREFERRED EMBODIMENTS

An embodiment of the present disclosure will be described hereinafter with reference to the drawings. Matters not specifically mentioned herein but required for carrying out the present disclosure can be understood as matters of design of a person skilled in the art based on related art in the field. The present disclosure can be carried out on the basis of the contents disclosed in the description and common general technical knowledge in the field. In the drawings, members and parts having the same functions are denoted by the same reference characters for description. Dimensional relationships (e.g., length, width, and thickness) in the drawings do not reflect actual dimensional relationships. It should be noted that a numerical range expressed as "A to B" herein includes A and B.

A "secondary battery" herein refers to a storage device enabling repetitive charging and discharging. A "lithium ion secondary battery" herein refers to a secondary battery that uses lithium ions as charge carriers and performs charge and discharge by movement of charges accompanying lithium ions between positive and negative electrodes.

The present disclosure will be described in detail hereinafter using a flat square lithium ion secondary battery including a flat wound electrode body and a flat battery case as an example, but the present disclosure is not intended to be limited to the embodiment.

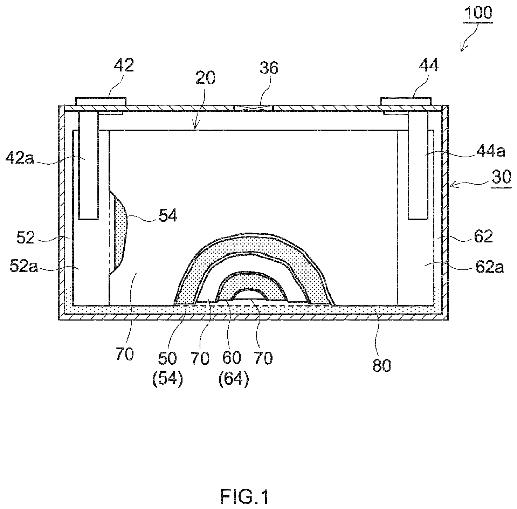

A lithium ion secondary battery 100 illustrated in FIG. 1 is a sealed battery in which a flat wound electrode body 20 and a nonaqueous electrolyte 80 are housed in a flat square battery case (i.e., an outer container) 30. The battery case 30 includes a positive electrode terminal 42 and a negative electrode terminal 44 for external connection, and a thin safety valve 36 configured such that when the internal pressure of the battery case 30 increases to a predetermined level or more, the safety valve 36 releases the internal pressure. The battery case 30 has an injection port (not shown) for injecting the nonaqueous electrolyte 80. The positive electrode terminal 42 is electrically connected to a positive electrode current collector plate 42a. The negative electrode terminal 44 is electrically connected to a negative electrode current collector plate 44a. A material for the battery case 30 is, for example, a metal material that is lightweight and has high thermal conductivity, such as aluminum. It should be noted that FIG. 1 does not strictly illustrate the amount of the nonaqueous electrolyte 80.

The nonaqueous electrolyte 80 contains a nonaqueous solvent and an electrolyte salt. In this embodiment, the nonaqueous solvent contains methyl acetate.

Methyl acetate acts to reduce a viscosity of the nonaqueous electrolyte 80. A volume ratio of methyl acetate in the nonaqueous solvent is not particularly limited as long as advantages of the present disclosure are obtained. From the viewpoint of desirable reduction of viscosity of the nonaqueous electrolyte 80, the volume ratio of methyl acetate in the nonaqueous solvent is, for example, 1% by volume or more, desirably 2% by mass or more, more desirably 3% by mass or more. On the other hand, the volume ratio of methyl acetate in the nonaqueous solvent is, for example, 40% by mass or less, desirably 35% by mass or less, more desirably 30% by mass or less.

The nonaqueous solvent may include an organic solvent other than methyl acetate. Examples of the organic solvent include carbonates, ethers, nitriles, sulfones, and lactones, and among these, carbonates are especially desirable. Examples of the carbonates include ethylene carbonate (EC), propylene carbonate (PC), diethyl carbonate (DEC), dimethyl carbonate (DMC), ethyl methyl carbonate (EMC), monofluoroethylene carbonate (MFEC), difluoroethylene carbonate (DFEC), monofluoromethyl difluoromethyl carbonate (F-DMC), and trifluorodimethyl carbonate (TFDMC). Such organic solvents may be used alone, or two or more of them may be used in combination. Such organic solvents may be used alone, or two or more of them may be used in combination. The nonaqueous solvent typically contains methyl acetate and carbonates, for example, and may contain only methyl acetate and carbonates.

Desired examples of the electrolyte salt include lithium salts (desirably LiPF₆) such as LiPF₆, LiBF₄, and lithium bis(fluorosulfonyl)imide (LiFSI). A concentration of the electrolyte salt is desirably 0.7 mol/L or more and 1.3 mol/L or less.

It should be noted that the nonaqueous electrolyte 80 may include components not described above, for example, various additives exemplified by: a film forming agent such as vinylene carbonate (VC) and an oxalato complex; a gas generating agent such as biphenyl (BP) or cyclohexylbenzene (CHB); and a thickener, to the extent that the effects of the present disclosure are not significantly impaired.

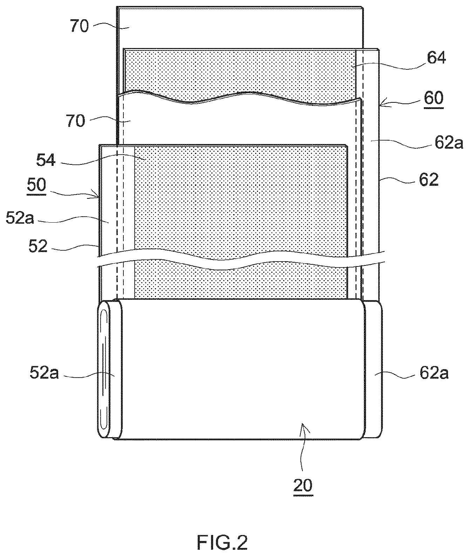

As illustrated in FIGS. 1 and 2, in the wound electrode body 20, a positive electrode sheet 50 and a negative electrode sheet 60 are stacked with two long separator sheets 70 interposed therebetween and are wound in the longitudinal direction. In the positive electrode sheet 50, a positive electrode active material layer 54 is formed on one or each (each in this example) surface of an elongated positive electrode current collector 52 along the longitudinal direction. In the negative electrode sheet 60, a negative electrode active material layer 64 is formed on one or each (each in this example) surface of an elongated negative electrode current collector 62 along the longitudinal direction. A positive electrode active material layer non-formed portion 52a (i.e., a portion where no positive electrode active material layer 54 is formed and the positive electrode current collector 52 is exposed) and a negative electrode active material layer non-formed portion 62a (i.e., a portion where no negative electrode active material layer 64 is formed and the negative electrode current collector 62 is exposed) extend off outward from both ends of the wound electrode body 20 in the winding axis direction (i.e., sheet width direction orthogonal to the longitudinal direction). The positive electrode current collector plate 42a and the negative electrode current collector plate 44a are respectively joined to the positive electrode active material layer non-formed portion 52a and the negative electrode active material layer non-formed portion 62a.

The positive electrode current collector 52 constituting the positive electrode sheet 50 may be a known positive electrode current collector for use in a lithium ion secondary battery, and examples of the positive electrode current collector 52 include sheets or foil of highly conductive metals (e.g., aluminum, nickel, titanium, and stainless steel). The positive electrode current collector 52 is desirably aluminum foil.

Dimensions of the positive electrode current collector 52 are not particularly limited, and may be appropriately determined depending on battery design. In the case of using aluminum foil as the positive electrode current collector 52, the thickness thereof is not particularly limited, and is, for example, 5 µm or more and 35 µm or less, desirably 7 µm or more and 20 µm or less.

The positive electrode active material layer 54 contains a positive electrode active material. As the positive electrode active material, at least a lithium nickel cobalt manganese composite oxide is used. The lithium nickel cobalt manganese composite oxide has a crystal structure of layered structure.

It should be noted that the "lithium nickel cobalt manganese composite oxide" herein includes not only oxides including Li, Ni, Co, Mn, and O as constituent elements, but also oxides including one or more additive elements besides the foregoing elements. Examples of the additive elements include transition metal elements and typical metal elements, such as Mg, Ca, Al, Ti, V, Cr, Y, Zr, Nb, Mo, Hf, Ta, W, Na, Fe, Zn, and Sn. The additive element may be a metalloid element such as B, C, Si, or P, and a nonmetal element such as S, F, Cl, Br, or I.

From the viewpoint of high energy density of the lithium ion secondary battery 100, in the lithium nickel cobalt manganese composite oxide, a percentage of nickel in a total content of metal elements except for lithium is desirably 30% by mole or more, more desirably 50% by mole or more.

Specifically, the lithium nickel cobalt manganese composite oxide desirably has the composition expressed by Formula (I):

Li₁₊ₓNi_{y}Co_{z}Mn_{(1-y-z)}M_{α}O₂-_{β}Q_{β} (I)

In Formula (I), x, y, z, α, and β respectively satisfy -0.3 ≤ x ≤ 0.3, 0.1 < y < 0.9, 0 < z < 0.5, 0 ≤ α ≤ 0.1, and 0 ≤ β ≤ 0.5. M is at least one element selected from the group consisting of Zr, Mo, W, Mg, Ca, Na, Fe, Cr, Zn, Sn, B, and Al. Q is at least one element selected from the group consisting of F, Cl, and Br.

In the formula, x desirably satisfies 0 ≤ x ≤ 0.3, more desirably satisfies 0 ≤ x ≤ 0.15. From the viewpoint of high energy density of the lithium ion secondary battery 100, y and z desirably satisfy 0.30 ≤ y ≤ 0.88 and 0.02 ≤ z ≤ 0.45, more desirably satisfy 0.50 ≤ y ≤ 0.88 and 0.02 ≤ z ≤ 0.25, α desirably satisfies 0 ≤ α ≤ 0.01, may be 0, and β desirably satisfies 0 ≤ β ≤ 0.1, more desirably satisfies 0.

As the positive electrode active material, only one type of a lithium nickel cobalt manganese composite oxide may be used, or two or more types of lithium nickel cobalt manganese composite oxides having different compositions, particle shapes, and the like may be used in combination.

In this embodiment, the positive electrode active material has a BET specific surface area of 1.8 m²/g to 2.8 m²/g. The range of a BET specific surface area of a positive electrode active material used in a lithium ion secondary battery is in a range starting from about 0.1 m²/g and exceeding 10 m²/g, and thus, this embodiment employs a positive electrode active material having a small BET specific surface area. The positive electrode active material having the BET specific surface area in the range described above has high stability.

In addition, a ratio of the BET specific surface area to the average particle size (D50) of the positive electrode active material is 0.62 or more. A combination of such a positive electrode active material and a nonaqueous electrolyte containing methyl acetate can enhance output characteristics of the lithium ion secondary battery 100. This is because of the following reasons.

The configuration in which the ratio of the BET specific surface area to the average particle size (D50) of the positive electrode active material is 0.62 or more means that a positive electrode active material having a large BET specific surface area relative to the average particle size (D50) is used. The configuration in which the ratio of the BET specific surface area to the average particle size (D50) is 0.62 or more is a configuration obtained by forming positive electrode active material particles as hollow particles. That is, the hollow particles have larger surface areas therein due to inner voids, and therefore, it is possible to increase the ratio of the BET specific surface area to the average particle size (D50).

Thus, in this embodiment, the positive electrode active material is generally hollow particles. In this embodiment, the nonaqueous electrolyte 80 contains methyl acetate so that the viscosity of the nonaqueous electrolyte 80 is thereby reduced. The combination of the positive electrode active material and the nonaqueous electrolyte 80 as described above, therefore, facilitates entering of the nonaqueous electrolyte 80 having a reduced viscosity into hollow portions (i.e., inner voids) of the hollow particles, and accordingly, the contact area between the nonaqueous electrolyte 80 and the positive electrode active material can be increased. As a result, the reaction area can be increased, and output characteristics of the lithium ion secondary battery 100 can be enhanced.

From the viewpoint of more excellent output characteristics, the ratio of the BET specific surface area to the average particle size (D50) of the positive electrode active material is desirably 0.70 or more, more desirably 0.80 or more. The upper limit of this ratio is defined by technical limitations, and may be 3.0 or less, 2.0 or less, 1.5 or less, or 1.0 or less.

The "specific surface area" herein refers to a surface area calculated by analysis with a BET method (e.g., single-point BET method) based on a gas adsorption amount measured with a gas adsorption method (constant-volume adsorption method) using nitrogen (N₂) gas as an adsorbate. The BET specific surface area can be measured with a commercially available specific surface area analyzer.

The "average particle size (D50)" herein refers to a median diameter (D50), and means a particle size corresponding to a cumulative frequency of 50 % by volume from the small-size particle side in volume-based particle size distribution based on a laser diffraction and scattering method. Thus, the average particle size (D50) can be obtained by using a commercially available particle size distribution analyzer of a laser diffraction and scattering type.

It should be noted that since the positive electrode active material has a BET specific surface area of 1.8 m²/g to 2.8 m²/g, and a ratio of the BET specific surface area to the average particle size (D50) of the positive electrode active material is 0.62 or more, the average particle size (D50) of the positive electrode active material is about 4.52 µm at most. The average particle size (D50) of the positive electrode active material is desirably 1.0 µm or more, more desirably 2.0 µm or more.

As described above, the positive electrode active material is generally hollow particles. The "hollow particles" herein refer to particles having inner voids larger than gaps between primary particles in secondary particles (so-called solid particles) formed by simply agglomerated primary particles. Thus, the hollow particles typically include shell portions constituted by a lithium nickel manganese cobalt composite oxide, and hollow portions formed inside the shell portions. The hollow particles also typically have through holes penetrating the shell portions such that the nonaqueous electrolyte 80 can enter the hollow portions. The number of the hollow portions in one hollow particle is not particularly limited, and may be one or two or more. The number of the through holes in one hollow particle is not particularly limited, and may be one or two or more.

A porosity of the hollow particles is not particularly limited, and is typically 20% to 50%. It should be noted that the porosity of hollow particles can be determined as follows. A cross-sectional electron microscopic image of hollow particles is obtained, and a proportion of a total area of voids to an area of the entire particles (sum of an area occupied by the particles and an area of the voids) is calculated in terms of percentage. This value is calculated for 100 or more hollow particles, and an average of the obtained values is defined as a porosity of the hollow particles.

A DBP absorption amount of the hollow particles is not particularly limited, and is typically 35 mL/100g to 50 mL/100g. It should be noted that the DBP absorption amount can be measured by using dibutyl phthalate (DBP) as a reagent liquid and in conformity with the method described in JIS K6217-4:2008, and can be obtained as an average of results of three measurements.

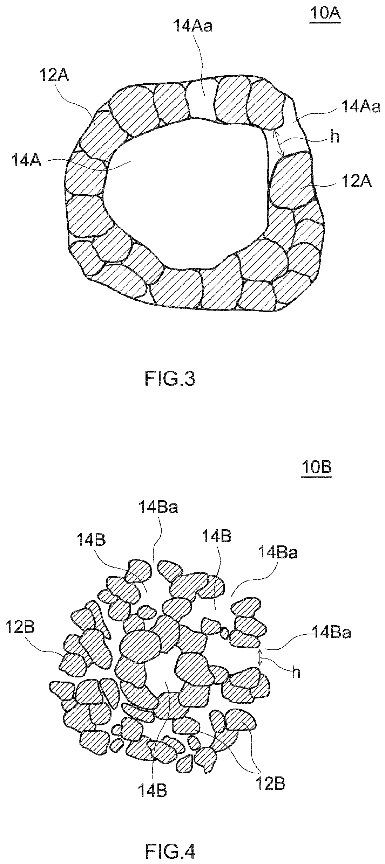

FIGS. 3 and 4 show examples of hollow particles. Each of FIGS. 3 and 4 is a schematic cross-sectional view illustrating an example of hollow particles of the positive electrode active material. In the example illustrated in FIG. 3, a hollow particle 10A includes one hollow portion 14A, and in the hollow particle 10A, primary particles 12A of a lithium nickel manganese cobalt composite oxide are connected in a ring shape to form a shell portion. In the illustrated example, the primary particles 12A form a single layer, but the primary particles 12A may be stacked in the thickness direction of the shell portion to form multiple layers. The shell portion surrounds the hollow portion 14A. The shell portion has through holes 14Aa, and each of the through holes 14Aa has an opening width h that is enough to allow the nonaqueous electrolyte 80 to enter the hollow portion 14A.

In the example illustrated in FIG. 4, primary particles 12B are agglomerated more loosely than usual, and accordingly, a hollow particle 10B has relatively large hollow portions 14B. It should be noted that in FIG. 4, some primary particles 12B appear to be separated from other particles, but this is because FIG. 4 is a cross-sectional view, and these particles are actually in contact with other primary particles (not shown) in an area not shown in the drawing. In the hollow particle 10B, agglomerated primary particles 12B form shell portions each surrounding the corresponding one of the hollow portions 14B. Each of the shell portions has a through hole 14Ba with an opening width h that is enough to allow the nonaqueous electrolyte 80 to enter the hollow particle 10B.

It should be noted that there are known methods for producing positive electrode active materials in the forms of hollow particle having various particle sizes, various pore diameters, and various porosities. Thus, the positive electrode active material used in this embodiment can be obtained according to a known method.

The positive electrode active material may contain a positive electrode active material other than the lithium nickel manganese cobalt composite oxide within a range that does not significantly inhibit the effects of the present disclosure (e.g., less than 20% by mass, desirably 10% by mass or less, more desirably 5% by mass or less, with respect to the total mass of the positive electrode active material). The positive electrode active material may consist only of a lithium nickel manganese cobalt composite oxide.

A content of the positive electrode active material in the positive electrode active material layer 54 (i.e., content of the positive electrode active material with respect to the total mass of the positive electrode active material layer 54) is not specifically limited, and is, for example, 80 % by mass or more, desirably 87 % by mass or more, more desirably 90 % by mass or more, even more desirably 95 % by mass or more, much more desirably 97 % by mass or more.

The positive electrode active material layer 54 may include components other than the positive electrode active material, such as trilithium phosphate, a binder, and a conductive agent.

A content of trilithium phosphate in the positive electrode active material layer 54 is not particularly limited, and is desirably 1% by mass or more and 15% by mass or less, more desirably 2% by mass or more and 12% by mass or less.

Examples of the binder include polyvinylidene fluoride (PVdF). A content of the binder in the positive electrode active material layer 54 is not particularly limited, and is desirably 0.1 % by mass or more and 10 % by mass or less, more desirably 0.2 % by mass or more and 5 % by mass or less, even more desirably 0.3 % by mass or more and 2 % by mass or less.

Desired examples of the conductive agent include carbon materials such as carbon black (e.g., acetylene black (AB)), carbon nanotubes (CNTs), and graphite. The conductive agent is desirably CNTs. The CNTs have high conductivity, and in addition, each have a hollow structure. Thus, in the case of using CNTs as the conductive agent, the nonaqueous electrolyte 80 whose viscosity has been reduced by methyl acetate can be distributed in the hollow portions of the CNTs, and wettability between the positive electrode active material layer 54 and the nonaqueous electrolyte 80 can be improved. As a result, output characteristics and other characteristics of the lithium ion secondary battery 100 can be further enhanced.

The type of the CNTs is not particularly limited, and single-walled carbon nanotubes (SWCNTs), double- walled carbon nanotubes (DWCNTs), multi-walled carbon nanotubes (MWCNTs), and so forth can be used. These carbon nanotubes may be used alone or two or more types of them may be used in combination. The CNTs may be produced by a method such as an arc discharge method, a laser ablation method, or a chemical vapor deposition method. In general, MWCNTs have larger inner diameters than those of SWCNTs. Accordingly, since the nonaqueous electrolyte 80 having a viscosity reduced by methyl acetate can be more easily distributed in the hollow portion of the CNTs, the CNTs are desirably MWCNTs.

An average length of the CNTs is not particularly limited. When the average length of the CNTs is excessively long, the CNTs are agglomerated, and dispersibility thereof tends to decrease. In addition, Li ions diffused in the CNTs are not easily released from the CNTs. For this reason, the average length of the CNTs is desirably 15 µm or less, more desirably 8.0 µm or less, and even more desirably 5.0 µm or less. On the other hand, when the average lengths of the CNTs is excessively short, a surface of the positive electrode active material is not easily covered with CNTs, and a conductive path between positive electrode active materials is less likely to be formed. For this reason, the average length of the CNTs is desirably 0.1 µm or more.

The average diameter of the CNTs is not particularly limited, and is, for example, 0.1 nm to 150 nm. Since the nonaqueous electrolyte 80 is easily distributed in the hollow portions of the CNTs, the average diameter of the CNTs is desirably 1.0 nm or more, more desirably 2.0 nm or more. On the other hand, when the average diameter of the CNTs is excessively large, flexibility of particles of the CNTs decreases so that the shape of the CNTs approach a rod shape, resulting in difficulty in covering the positive electrode active material with the CNTs. As a result, the degree of enhancement of wettability of the surface of the positive electrode active material might be small. In view of this, the average diameter of the CNTs is desirably 100 nm or less, more desirably 50 nm or less.

It should be noted that the average length and the average diameter of the CNTs can be determined by taking an electron micrograph of the CNTs, and obtaining average values of lengths and diameters of 100 or more CNTs, respectively. Specifically, for example, a CNT dispersion is diluted and then dried, thereby preparing a measurement sample. This sample is observed with a scanning electron microscope (SEM), lengths and diameters of 100 or more CNTs are obtained, and averages of the obtained lengths and diameters are calculated. At this time, if CNTs are agglomerated again, a length and a diameter of the aggregate of the CNTs are obtained.

In the case of using CNTs as the conductive material, the content of CNTs in the positive electrode active material layer 54 is not particularly limited. When the content of the CNTs in the positive electrode active material layer 54 is excessively small, the effects described above might degrade. On the other hand, when the content of the CNTs is excessively large, inconvenience such as an increase in viscosity of the positive electrode slurry and a decrease in impregnating ability of the nonaqueous electrolyte 80 into the positive electrode active material layer 54 might occur in production of the lithium ion secondary battery 100. In view of this, the content of the CNTs in the positive electrode active material layer 54 is desirably 0.1 % by mass or more and 3.0 % by mass or less, more desirably 0.3 % by mass or more and 2.5 % by mass or less, even more desirably 0.5 % by mass or more and 2.0 % by mass or less.

In the case of using a material other than CNTs as the conductive material, the content of the material in the positive electrode active material layer 54 is not specifically limited, and is desirably 1% by mass or more and 15% by mass or less, more desirably 3% by mass or more and 13% by mass or less.

In the case of using CNTs as the conductive agent, the positive electrode active material layer may further include a disperser of carbon nanotubes (CNT disperser). Examples of the CNT disperser include a surfactant-type disperser (also called a low molecular disperser), a polymeric disperser, and an inorganic disperser. The CNT disperser may be anionic, cationic, amphoteric, or nonionic. Thus, the CNT disperser may have, in the molecular structure thereof, at least one functional group selected from the group consisting of an anionic group, a cationic group, and a nonionic group. The surfactant refers to an amphiphilic material with a chemical structure in which a hydrophilic moiety and a lipophilic moiety are included in a molecule structure and are bound together by a covalent bond.

Specific examples of the CNT disperser include: polycondensed aromatic surfactants such as a naphthalenesulfonic acid formalin condensate sodium salt, a naphthalenesulfonic acid formalin condensate ammonium salt, and a methyl naphthalenesulfonic acid formalin condensate sodium salt; polycarboxylic acid and a salt thereof such as polyacrylic acid and a salt thereof and polymethacrylic acid and a salt thereof; triazine derivative dispersers (desirably a disperser including a carbazolyl group or a benzimidazolyl group); polyvinylpyrrolidone (PVP); polymers having a polynuclear aromatic group such as pyrene or anthracene in a side chain; and polynuclear aromatic ammonium derivatives such as a pyrene ammonium derivative (e.g., a compound in which an ammonium bromide group is introduced to pyrene) and an anthracene ammonium derivative. These CNT dispersers may be used alone or two or more of them may be used in combination. The CNT disperser desirably includes a polynuclear aromatic group. Specifically, the CNT disperser is desirably a polymer having a polynuclear aromatic group in a side chain, and a polynuclear aromatic ammonium derivative.

A content of the CNT disperser may be appropriately determined depending on the types of CNTs and the CNT disperser. Here, when the proportion of the CNT disperser is excessively small, dispersibility might be insufficient. On the other hand, when the proportion of the CNT disperser is excessively large, the CNT disperser excessively adheres to the CNT surface, thereby causing the possibility of a resistance increase. In a case where the CNTs are SWCNTs, the amount of use of the CNT disperser is, for example, 1 part by mass to 400 parts by mass, desirably 20 parts by mass to 200 parts by mass, with respect to 100 parts by mass of CNTs. In a case where the CNTs are MWNTs, the amount of use of the CNT disperser is, for example, 1 part by mass to 100 parts by mass, desirably 4 parts by mass to 40 parts by mass, with respect to 100 parts by mass of the CNTs.

The thickness of the positive electrode active material layer 54 is not particularly limited, and is, for example, 10 µm or more and 400 µm or less, desirably 20 µm or more and 300 µm or less.

The weight per unit area of the positive electrode active material layer 54 is not particularly limited, and desirably 4 mg/cm² or more, more desirably 8 mg/cm² or more, even more desirably 10 mg/cm² or more, especially desirably 20 mg/cm² or more. The weight per unit area of the positive electrode active material layer 54 may be 50 mg/cm² or less, or 40 mg/cm² or less.

The positive electrode sheet 50 may include an insulating layer (not shown) at the boundary between the positive electrode active material layer non-formed portion 52a and the positive electrode active material layer 54. The insulating layer may contain ceramic particles, for example.

As the negative electrode current collector 62 constituting the negative electrode sheet 60, a known negative electrode current collector for use in a lithium ion secondary battery may be used, and examples of the negative electrode current collector include sheets or foil of highly conductive metals (e.g., copper, nickel, titanium, and stainless steel). The negative electrode current collector 62 is desirably copper foil.

Dimensions of the negative electrode current collector 62 are not particularly limited, and may be appropriately determined depending on battery design. In the case of using copper foil as the negative electrode current collector 62, the thickness of the foil is not particularly limited, and is, for example, 5 µm or more and 35 µm or less, desirably 6 µm or more and 20 µm or less.

The negative electrode active material layer 64 contains a negative electrode active material. Examples of the negative electrode active material include carbon materials such as graphite, hard carbon, and soft carbon. Graphite may be natural graphite or artificial graphite, and may be amorphous carbon-coated graphite in which graphite is coated with an amorphous carbon material.

The average particle size (median particle size: D50) of the negative electrode active material is not specifically limited, and is, for example, 0.1 µm or more and 50 µm or less, desirably 1 µm or more and 25 µm or less, more desirably 5 µm or more and 20 µm or less. It should be noted that the average particle size (D50) of the negative electrode active material can be determined by, for example, a laser diffraction/scattering method.

The negative electrode active material layer 64 can include components other than the active material, such as a binder or a thickener. Examples of the binder include styrene-butadiene rubber (SBR) and polyvinylidene fluoride (PVdF). Examples of the thickener include carboxymethyl cellulose (CMC).

A content of the negative electrode active material in the negative electrode active material layer 64 is desirably 90% by mass or more, more desirably 95% by mass or more and 99% by mass or less. A content of the binder in the negative electrode active material layer 64 is desirably 0.1% by mass or more and 8% by mass or less, more desirably 0.5% by mass or more and 3% by mass or less. A content of the thickener in the negative electrode active material layer 64 is desirably 0.3% by mass or more and 3% by mass or less, more desirably 0.5% by mass or more and 2% by mass or less.

The thickness of the negative electrode active material layer 64 is not particularly limited, and is, for example, 10 µm or more and 400 µm or less, desirably 20 µm or more and 300 µm or less.

The weight per unit area of the negative electrode active material layer 64 is not particularly limited, and desirably 4 mg/cm² or more, more desirably 8 mg/cm² or more, even more desirably 10 mg/cm² or more, especially desirably 20 mg/cm² or more. The weight per unit area of the negative electrode active material layer 64 may be 50 mg/cm² or less, or 40 mg/cm² or less.

Examples of the separator 70 include a porous sheet (film) of a resin such as polyethylene (PE), polypropylene (PP), polyester, cellulose, or polyamide. The porous sheet may have a single-layer structure or a laminated structure of two or more layers (e.g., three-layer structure in which PP layers are stacked on each surface of a PE layer). A heat-resistance layer (HRL) containing, for example, ceramic particles may be provided on a surface of the separator 70.

The thickness of the separator 70 is not particularly limited, and is, for example, 5 µm or more and 50 µm or less, desirably 10 µm or more and 30 µm or less. An air permeability of the separator 70 obtained by a Gurley permeability test is not particularly limited, and is desirably 350 sec./100 cc or less.

The lithium ion secondary battery 100 has excellent output characteristics. Since the positive electrode active material has a small BET specific surface area, the positive electrode active material has high stability, and accordingly, the lithium ion secondary battery 100 also has high durability. The lithium ion secondary battery 100 is applicable to various applications. Examples of suitable applications include drive power supplies to be mounted on vehicles such as battery electric vehicles (BEVs), hybrid electric vehicles (HEVs), and plug-in hybrid electric vehicles (PHEVs). The lithium ion secondary battery 100 can be used as a storage battery for, for example, a small-size power storage device. Since the lithium ion secondary battery 100 has excellent output characteristics, the lithium ion secondary battery 100 is especially desirably applicable to drive power supplies mounted on vehicles such as battery electric vehicles (BEVs), hybrid electric vehicles (HEVs), and plug-in hybrid electric vehicles (PHEVs) (especially drive power supply for HEVs). The lithium ion secondary battery 100 can be used in a form of a battery module in which a plurality of batteries are typically connected in series and/or in parallel.

The foregoing description is directed to the square lithium ion secondary battery 100 including the flat wound electrode body 20 as an example. Alternatively, the lithium ion secondary battery can also be configured as a lithium ion secondary battery including a stacked-type electrode body (i.e., electrode body in which a plurality of positive electrodes and a plurality of negative electrodes are alternately stacked). The lithium ion secondary battery can also be configured as a cylindrical lithium ion secondary battery or a laminated-case lithium ion secondary battery.

The secondary battery according to this embodiment can be configured as a nonaqueous secondary battery other than a lithium ion secondary battery according to a known method.

Examples of the present disclosure will now be described in detail, but are not intended to limit the present disclosure to these examples.

### [Examples1 to 9 and Comparative Examples 1 to 5]

As a positive electrode active material, LiNi_{0.50}Co_{0.20}Mn_{0.30}O₂ having a BET specific surface area and an average particle size (D50) shown in Table 1 was prepared. A positive electrode active material of Comparative Example 3 was solid particles, and positive electrode active materials of the examples and the other comparative examples were hollow particles.

Each of these positive electrode active materials, carbon nanotubes as a conductive agent, and PVdF as a binder were mixed at a mass ratio of active material : conductive agent: PVdF = 97.5 : 1.5 : 1.0 in a N-methyl-2-pyrrolidone (NMP), thereby preparing positive electrode slurry. This positive electrode slurry was applied onto aluminum foil and dried, thereby producing a positive electrode sheet.

Natural graphite (C) as a negative electrode active material, styrene-butadiene rubber (SBR) as a binder, and carboxymethyl cellulose (CMC) as a thickener were mixed at a mass ratio of C : SBR : CMC = 98 : 1 : 1 in pure water, thereby preparing negative electrode slurry. This negative electrode slurry was applied onto copper foil and dried, thereby producing a negative electrode sheet.

A polyolefin porous film as a separator was sandwiched between the thus-produced positive electrode sheet and negative electrode sheet, thereby producing an electrode body. In the electrode body, an electrode opposed area was about 20 cm². This electrode body was placed in a laminated case having an opening at an end.

A mixed solvent including ethylene carbonate (EC), ethyl methyl carbonate (EMC), dimethyl carbonate (DMC), and methyl acetate at a volume ratio of 30 : 30-x : 40 : x was prepared. The value of x is shown in Table 1. In this mixed solvent, LiPF₆ as an electrolyte salt was dissolved at a concentration of 1.1 mol/L, thereby preparing a nonaqueous electrolyte. This nonaqueous electrolyte was injected into the laminated case, and the opening of the laminated case was heat bonded, thereby sealing the laminated case. In this manner, a single-layer laminated cell with a capacity of about 20 mAh was obtained as an evaluation lithium ion secondary battery.

### <Output Evaluation>

Each evaluation lithium ion secondary battery was subjected to initial charge at a current value of 1/3 C, and then subjected to an aging treatment at 60°C for 24 hours. Thereafter, each evaluation lithium ion secondary battery was adjusted to have a state of charge (SOC) of 50%, and then placed in an environment of 25°C. The evaluation lithium ion secondary batteries were discharged to a predetermined cut voltage with various current values, and times (second) in which battery voltages reached the cut voltage were measured. Based on the measurement results, an output with which the battery voltage reached the cut voltage in 10 seconds (10-second output) was measured. When an output of Comparative Example 1 is " 1.00," ratios of outputs of the examples and the other comparative examples to Comparative Example 1 were calculated. Table 1 shows the results.

### [Table 1]

**Table 1**

| | Positive Electrode Active Material | | | Methyl Acetate | Output Ratio |
|---|---|---|---|---|---|
| | BET (m²/g) | D50 (*µ* m) | BET/D50 | Volume Ratio x (vol%) | |
| Example 1 | 2.2 | 2.7 | 0.81 | 3 | 1.23 |
| Example 2 | 2.3 | 3.1 | 0.74 | 3 | 1.18 |
| Example 3 | 2.0 | 3.0 | 0.67 | 3 | 1.06 |
| Example 4 | 2.4 | 2.7 | 0.89 | 3 | 1.25 |
| Example 5 | 2.2 | 2.7 | 0.81 | 30 | 1.22 |
| Example 6 | 1.8 | 2.9 | 0.62 | 3 | 1.08 |
| Example 7 | 2.4 | 3.1 | 0.77 | 3 | 1.13 |
| Example 8 | 2.8 | 4.3 | 0.65 | 3 | 1.07 |
| Example 9 | 2.8 | 2.9 | 0.97 | 3 | 1.27 |
| Comparative Example 1 | 2.2 | 2.7 | 0.81 | 0 | 1.00 |
| Comparative Example 2 | 1.4 | 5.0 | 0.28 | 3 | 0.74 |
| Comparative Example 3 | 0.7 | 3.9 | 0.18 | 3 | 0.63 |
| Comparative Example 4 | 2.5 | 4.2 | 0.60 | 3 | 0.93 |
| Comparative Example 5 | 1.9 | 3.5 | 0.54 | 3 | 0.89 |

From the results of Table 1, it can be understood that output is especially high in a case where a lithium nickel cobalt manganese composite oxide is used as a positive electrode active material, the positive electrode active material has a BET specific surface area of 1.8 m²/g to 2.8 m²/g, a ratio of the BET specific surface area to the average particle size (D50) of the positive electrode active material is 0.62 or more, and the nonaqueous solvent of the nonaqueous electrolyte contains methyl acetate. Accordingly, it can be understood that the nonaqueous electrolyte secondary battery disclosed here has enhanced output characteristics while using the positive electrode active material with a small BET specific surface area.

Specific examples of the present disclosure have been described in detail hereinbefore, but are merely illustrative examples, and are not intended to limit the scope of claims. The techniques described in claims include various modifications and changes of the above exemplified specific examples.

That is, the nonaqueous electrolyte secondary battery disclosed here is any one of items [1] to [7].
[1] A nonaqueous electrolyte secondary battery including:
   a positive electrode;
   a negative electrode; and
   a nonaqueous electrolyte, wherein
   the positive electrode includes a positive electrode active material layer containing a positive electrode active material,
   the positive electrode active material includes a lithium nickel cobalt manganese composite oxide,
   the positive electrode active material has a BET specific surface area of 1.8 m²/g to 2.8 m²/g,
   a ratio of the BET specific surface area to an average particle size (D50) of the positive electrode active material is 0.62 or more,
   the nonaqueous electrolyte contains a nonaqueous solvent and an electrolyte salt, and
   the nonaqueous solvent contains methyl acetate.
[2] The nonaqueous electrolyte secondary battery of item [1] in which the nonaqueous solvent contains 3% by volume to 30% by volume of the methyl acetate.
[3] The nonaqueous electrolyte secondary battery of item [1] or [2] in which the ratio of the BET specific surface area to the average particle size (D50) of the positive electrode active material is 0.80 or more.
[4] The nonaqueous electrolyte secondary battery of any one of items [1] to [3] in which the positive electrode active material layer further contains carbon nanotubes as a conductive agent.
[5] The nonaqueous electrolyte secondary battery of any one of items [1] to [4]in which the positive electrode active material is hollow particles.
[6] The nonaqueous electrolyte secondary battery of any one of items [1] to [5] in which a percentage of nickel in a total content of metal elements except for lithium in the lithium nickel cobalt manganese composite oxide is 50% by mole or more.
[7] The nonaqueous electrolyte secondary battery of any one of items [1] to [6] in which the nonaqueous electrolyte secondary battery is a battery of a vehicle driving power supply for a hybrid vehicle.

## Claims

1. A nonaqueous electrolyte secondary battery (100) comprising:
a positive electrode (50):
a negative electrode (60); and
a nonaqueous electrolyte (80), wherein
the positive electrode (50) includes a positive electrode active material layer (54) containing a positive electrode active material,
the positive electrode active material includes a lithium nickel cobalt manganese composite oxide,
the positive electrode active material has a BET specific surface area of 1.8 m²/g to 2.8 m²/g,
a ratio of the BET specific surface area to an average particle size (D50) of the positive electrode active material is 0.62 or more,
the nonaqueous electrolyte (80) contains a nonaqueous solvent and an electrolyte salt, and
the nonaqueous solvent contains methyl acetate.

2. The nonaqueous electrolyte secondary battery (100) according to claim 1, wherein the nonaqueous solvent contains 3% by volume to 30% by volume of the methyl acetate.

3. The nonaqueous electrolyte secondary battery (100) according to claim 1, wherein the ratio of the BET specific surface area to the average particle size (D50) of the positive electrode active material is 0.80 or more.

4. The nonaqueous electrolyte secondary battery (100) according to claim 1, wherein the positive electrode active material layer (54) further contains carbon nanotubes as a conductive agent.

5. The nonaqueous electrolyte secondary battery (100) according to claim 1, wherein the positive electrode active material is hollow particles (10A, 10B).

6. The nonaqueous electrolyte secondary battery (100) according to claim 1, wherein a percentage of nickel in a total content of metal elements except for lithium in the lithium nickel cobalt manganese composite oxide is 50% by mole or more.

7. The nonaqueous electrolyte secondary battery (100) according to claim 1, wherein the nonaqueous electrolyte secondary battery (100) is a battery of a vehicle driving power supply for hybrid vehicles.
